# FASCICULE DE BREVET EUROPEEN

(11) **EP 0 486 401 B1**
(45) Date de publication et mention de la délivrance du brevet: **01.03.1995**
(21) Numéro de dépôt: 91403070.5
(22) Date de dépôt: 15.11.1991
(51) Int. Cl.: F16B 5/00, H05H 1/12, F02K 9/97

(54) **Dispositif de liaison entre deux corps susceptibles de se dilater de façon différente et procédé de réalisation d'un tel dispositif**
Verbindungsvorrichtung zwischen zwei Körpern mit verschiedenen Dehnungskoeffizienten und Verfahren zum Herstellen derselben
Device for connecting two bodies possessing different expansion characteristics and method of making same

(30) Priorité: 16.11.1990 FR 9014326
(43) Date de publication de la demande: 20.05.1992
(73) Titulaire: SOCIETE EUROPEENNE DE PROPULSION (S.E.P.) S.A., 92150 Suresnes (FR)
(72) Inventeur: Clebant, Jean-Claude, F-33560 Carbon Blanc (FR)
(74) Mandataire: Thévenet, Jean-Bruno

(56) Documents cités:
- EP-A- 0 250 345
- EP-A- 0 280 940
- US-A- 3 426 528
- US-A- 4 838 031

## Description

La présente invention se rapporte à un dispositif de liaison entre deux corps qui, soumis à de forts gradients thermiques, se dilatent de façon différente, ces corps présentant deux faces parallèles en regard par lesquelles ils sont reliés mutuellement.

Lorsqu'une paroi conçue pour résister à de forts gradients thermiques entre ses deux faces et pour permettre le passage d'importants flux de chaleur au travers de son épaisseur est formée par l'assemblage de deux plaques hétérogènes, à savoir d'une plaque faite en un matériau supportant des températures très élevées, tel que du carbone ou un composite thermostructural, et d'une plaque faite en un matériau bon conducteur de la chaleur, par exemple une plaque de cuivre comportant un circuit de refroidissement, des contraintes de cisaillement d'origine thermique apparaissent, à l'interface de liaison des deux plaques, du fait que celles-ci ne se dilatent pas de la même façon, leurs températures et leurs coefficients de dilatation thermique étant différents. Il en résulte que, pour assurer l'intégrité d'une telle paroi hétérogène, il est nécessaire de la décomposer en une mosaïque d'éléments de faible surface, ce qui accroît notablement la complexité de la structure.

Une autre solution est donnée par le document **US 3 426 528** qui décrit une structure de liaison 30 (figure 4) entre deux éléments parallèles de paroi 32, 34 qui s'étendent suivant la direction longitudinale de la paroi de telle sorte qu'elle puisse se déformer sous l'action de forces de compression ou de traction agissant sur les éléments de paroi. Toutefois, cette structure n'est pas à même de répondre aux contraintes de cisaillement provenant de dilatations thermiques apparaissant à la jonction de ces éléments.

L'invention a pour but de remédier à de tels inconvénients et de créer un dispositif de liaison entre deux corps qui maintienne, même lorsque ceux-ci offrent de grandes dimensions et sont l'objet de notables différences de dilatation face à de très hautes contraintes thermiques, l'intégrité de chacun des deux corps tout en assurant une liaison mécanique stricte entre eux malgré leur comportement différent.

A cet effet, le dispositif de liaison proposé selon l'invention consiste en une couche intermédiaire limitée par deux faces parallèles et interposée entre les deux faces desdits corps, cette couche étant formée d'une multitude de fils indépendants minces et flexibles, d'égale longueur, faits d'une matière rigide mais présentant néanmoins une certaine souplesse transversale et fixés par liaison d'encastrement à l'une et à l'autre des faces précitées desdits corps par des parties extrêmes respectives orientées perpendiculairement à ces dernières faces.

La couche intermédiaire, formée de fils juxtaposés non liés entre eux, crée un découplage en cisaillement entre les deux corps. Au cas où ceux-ci sont le siège de dilatations différentes, ces fils, rigides mais suffisamment minces pour pouvoir fléchir, se déforment par double flexion. Il en résulte un découplage des deux corps rendant négligeables les contraintes de cisaillement entre eux tout en maintenant l'intégrité mécanique des corps et la permanence de leur liaison mutuelle. Ainsi, une telle couche de transition autorise des liaisons fiables de surfaces importantes entre corps ou matériaux hétérogènes.

Lorsque les deux corps risquent d'être soumis à de notables forces de compression l'un vers l'autre, il convient que les fils formant la couche de liaison soient juxtaposés jointivement.

Les parties extrêmes des fils situées dans l'une au moins des faces de ladite couche peuvent être fixées au corps correspondant soit directement, soit par l'intermédiaire d'une feuille interposée s'étendant suivant ladite face, dans des conditions telles que cette feuille n'entrave pas les petits déplacements mutuels des parties extrêmes des fils en cas de dilatation différentielle.

De préférence, afin d'assurer la continuité thermique entre les corps à travers les couches intermédiaires constituant le dispositif de liaison, les fils sont de préférence réalisés en un matériau bon conducteur de la chaleur, tel qu'un métal ou du carbone, leurs parties extrêmes pouvant être fixées au moyen de brasure ou de soudure.

L'invention a également pour objet un procédé de fabrication d'une paroi composée de deux plaques à faces en regard, planes et parallèles, réunies par un dispositif de liaison tel que défini ci-dessus. Ce procédé, qui procure une liaison intime entre les différentes strates de la paroi pour assurer à la fois une liaison mécanique fiable et la continuité de matière nécessaire à une bonne conduction thermique, consiste essentiellement à disposer deux plaques de part et d'autre d'une couche intermédiaire de liaison composée de fils rigides juxtaposés d'égale longueur, orientés parallèlement suivant la direction perpendiculaire aux faces de ladite couche et réalisés en un matériau bon conducteur de la chaleur, cette couche intermédiaire étant préalablement réalisée sous forme de demi-produit stabilisé, et à effectuer la solidarisation de la face interne de chaque plaque avec la face correspondante dudit demi-produit.

Le demi-produit est de préférence réalisé en rassemblant lesdits fils en un faisceau limité par deux faces parallèles entre elles et perpendiculaires à la direction commune des fils, et en solidarisant entre elles les extrémités des fils situées dans l'une au moins des deux faces de la couche formée par le faisceau de fils, de façon suffisamment souple et malléable pour rendre cohérent le faisceau de fils sans empêcher de petits déplacements mutuels des extrémités solidarisées des fils.

La solidarisation mutuelle des extrémités des fils peut être effectuée par soudage ou brasage superficiel de façon à en assurer la liaison mutuelle soit directement, soit par l'intermédiaire d'une feuille de clinquant appliquée sur la face correspondante de la couche. Les extrémités des fils peuvent être solidarisées soit dans une seule des faces de la couche, soit respectivement dans chacune de celles-ci.

Dans une forme d'exécution avantageuse, ledit demi-produit est réalisé en confectionnant et en poussant pas à pas des fils d'égale longueur juxtaposés en faisceau dans un couloir de guidage de section rectangulaire, ces fils étant orientés perpendiculairement au fond du couloir et reposant sur une bande de clinquant qui progresse le long dudit fond, et en fixant sur celle-ci, à la sortie du couloir, les extrémités correspondantes des fils par soudage ou brasage. On peut prévoir de déposer une autre bande de clinquant sur la face du faisceau de fils opposée au fond du couloir, à cette bande étant de même soudées ou brasées les extrémités correspondantes des fils. De préférence, le faisceau de fils est confectionné et poussé pas à pas à l'aide d'un même organe animé d'un mouvement de va-et-vient qui, à chaque cycle de déplacement, sectionne en segments de longueur voulue les parties terminales de fils continus introduits à la demande, puis les pousse dans le couloir avec les segments précédemment sectionnés.

L'invention s'applique notamment à la réalisation, grâce à la couche intermédiaire de fils jointifs, des liaisons thermique et mécanique entre une plaque formant bouclier thermostructural et une plaque sous-jacente formant échangeur métallique, au sein de parois soumises à de fortes contraintes thermiques, utilisées par exemple dans les divertors en paroi interne de tokamak, les structures internes de moteurs à réaction combinés ou les échangeurs pour moteurs hypersoniques.

D'autres particularités et avantages de l'invention ressortiront de la description qui va suivre, en regard des dessins annexés, d'exemples de réalisation non limitatifs.

La figure 1 représente en perspective une paroi formée de deux plaques directement solidarisées selon la technique antérieure.

La figure 2 illustre les problèmes de cisaillement à l'interface entre deux plaques hétérogènes.

La figure 3 représente, à la manière de la figure 1, une paroi selon l'invention.

Les figures 4a et 4b illustrent schématiquement le comportement des fils composant la couche intermédiaire de la paroi de la figure 3.

La figure 5 montre, à plus grande échelle, comment se déforme un fil de ladite couche intermédiaire.

La figure 6 représente schématiquement un dispositif de fabrication de ladite couche intermédaire sous forme de demi-produit.

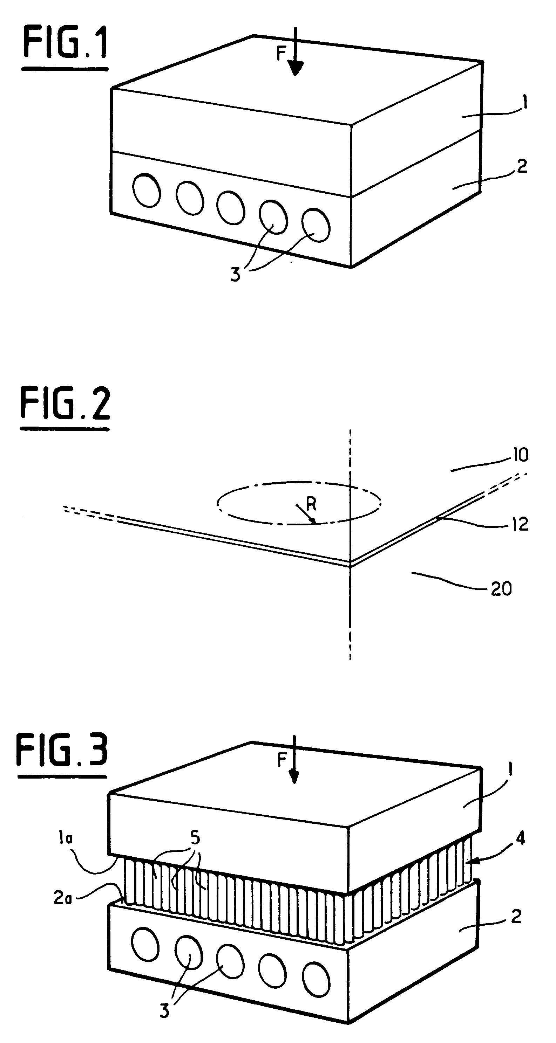

On voit sur la figure 1 une portion de paroi faisant partie d'un échangeur à haute température. Cette paroi est composée de l'association d'une première plaque 1, par exemple en carbone ou en composite thermostructural, capable de supporter les températures très élevées induites en surface par l'intense flux de chaleur F qui traverse la paroi suivant la direction normale, et d'une deuxième plaque 2, savoir une plaque métallique, par exemple en cuivre, comportant des canaux internes 3 faisant partie d'un circuit de fluide de refroidissement. Ces deux plaques sont solidarisées mutuellement par leurs faces internes en contact.

La présence d'un important gradient de température suivant la normale à la paroi et la différence des coefficients de dilatation des constituants des plaques 1 et 2 induisent dans la paroi des contraintes d'origine thermique, notamment des efforts de cisaillement, d'autant plus sévères que la paroi est plus épaisse. Or, de par sa fonction, celle-ci doit présenter généralement des caractéristiques mécaniques et thermiques incompatibles avec l'utilisation de plaques minces.

Si en effet on considère, à titre d'exemple, deux blocs 10, 20 de nature différente à joindre par une fine couche de brasure 12 assurant leur liaison, lors du refroidissement de l'ensemble, la brasure se solidifie et des contraintes apparaissent entre les deux blocs, même en cas de refroidissement isotherme, en raison de la différence de leurs coefficients de dilatation. A la contrainte limite supportable correspond, dans la couche de brasure 12, une zone de rayon R au delà de laquelle la liaison ne peut se maintenir : il y a soit rupture cohésive dans l'un des blocs 10, 20 ou dans la couche de brasure 12, ou rupture adhésive entre celle-ci et l'un ou l'autre des blocs. Il y a donc une limite géométrique à la zone où la liaison entre les blocs se conserve lors du refroidissement. Un raisonnement identique conduirait au même résultat dans le cas où un ensemble soumis à un flux thermique important serait le siège de forts gradients de température.

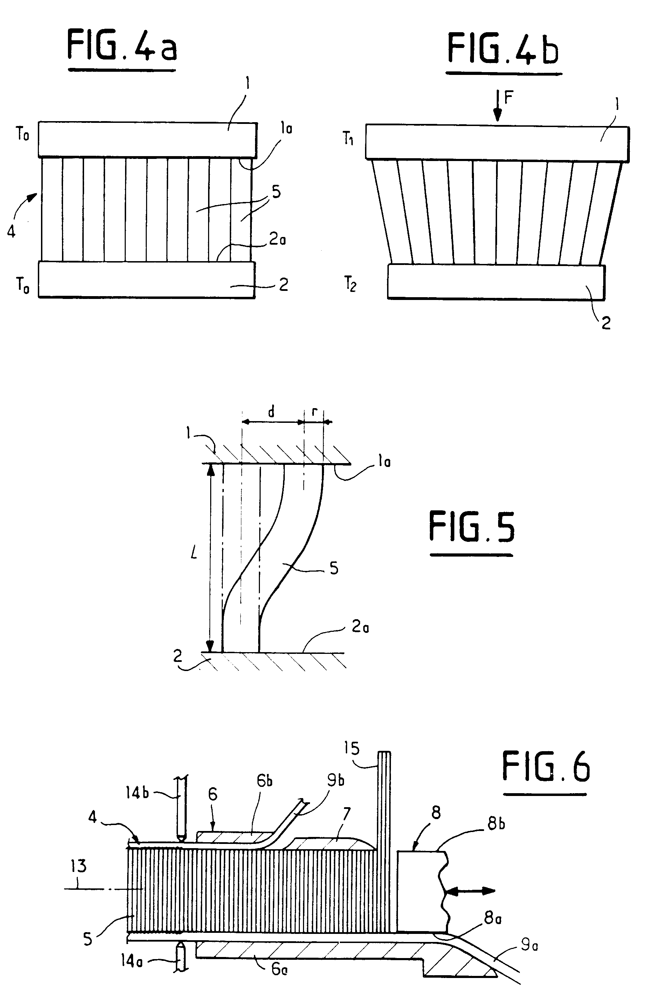

La figure 3 montre une paroi dont la structure tire parti de cette observation. Cette paroi comporte, comme la précédente, deux plaques 1 et 2, qui sont ici reliées mutuellement par l'intermédiaire d'une couche de transition 4 formée d'une multitude de fils 5 jointifs mais non liés entre eux, orientés suivant la direction normale à la paroi. Chacun des fils du faisceau ainsi formé est fixé à l'une et à l'autre des plaques 1, 2, par exemple par brasure de ses sections terminales respectivement aux faces internes en regard 1a, 2a des plaques 1, 2.

Les fils 5, réalisés en un matériau thermiquement conducteur tel qu'un métal ou le carbone, constituent des segments rigides, mais néanmoins légèrement déformables. La couche intermédiaire qu'ils forment offre ainsi un passage aisé au flux thermique qui doit traverser la paroi, tout en assurant, par effet d'appui mutuel des fils dans le faisceau, une stricte liaison mécanique entre les deux plaques, étant observé que la paroi n'est pas destinée à supporter d'importants efforts de compression suivant son épaisseur de nature à causer un flambage des fils.

Si, lorsque la paroi est à une température uniforme Tₒ, les fils s'étendent parallèlement entre eux (figure 4a), lorsque l'ensemble est traversé par un flux thermique F induisant dans la plaque 1, portée à une température T₁, une dilatation supérieure à celle de la plaque 2, portée à une température T₂ inférieure à T₁ (figure 4b), les fils 5 se déploient en fonction de la dilatation différentielle, effaçant toute contrainte de cisaillement entre les plaques 1 et 2 en se déformant par double flexion (figure 5) avec l'amplitude d qui convient en chaque point desdites plaques. Le faisceau de fils 5 se comporte ainsi comme une couche d'adaptation qui compense les effets destructeurs des forces de cisaillement issues de la dilatation différentielle des plaques 1 et 2. Corrélativement, il assure la continuité thermique en direction normale entre les deux plaques.

Ces résultats favorables ne sont obtenus que si la surface de l'extrémité de chacun des fils 5 respecte les conditions géométriques évoquées plus haut à propos du brasage de solides hétérogènes, autrement dit si le rayon r de la section droite des fils est inférieur au rayon R précédemment défini. En outre, les fils 5 doivent être suffisamment longs pour pouvoir être le siège d'une double flexion entre leurs extrémités comme représenté à la figure 5. En conséquence, les fils doivent présenter un élancement (longueur l/diamètre 2r) supérieur à une certaine valeur, qui peut être calculée ou déterminée expérimentalement.

La plaque 1, destinée à être exposée à des températures élevées, est généralement réalisée en un composite thermostructural à base de carbone ou de céramique. Les fils 5 peuvent être fixés à la face interne 1a d'une telle plaque par brasage à l'aide d'alliages présentant, à l'état fondu, une bonne mouillabilité vis-à-vis de ce genre de matériaux. Il faut toutefois prendre soin de limiter la présence de brasure à la zone de l'interface fils-plaque, afin d'exclure toute infiltration de la brasure le long des fils qui, les liant, détruira l'adaptabilité en cisaillement de la couche de transition qu'ils forment. Ce résultat peut être obtenu soit à l'aide d'un vernis de masquage ne découvrant que les sections terminales des fils, soit par utilisation d'un film calibré de brasure dans l'interface, puis mise en température pour faire fondre la brasure qui se met en place par capillarité.

Pour une fabrication industrielle d'une paroi telle que décrite, il convient de fabriquer la couche intermédiaire 4 sous forme d'un demi-produit cohérent autonome, pouvant être aisément manipulé. Un dispositif conforme à celui de la figure 6 peut être utilisé à cet effet.

Ce dispositif comprend un couloir 6 de section rectangulaire, servant de filière pour grouper en un ruban de même section rectangulaire les fils 5 qui vont former la couche 4. Le toit 6b du couloir 6 ne s'étend qu'au-dessus d'une partie terminale du fond 6a; il est précédé d'une lame tranchante 7 avec laquelle coopère le bord supérieur 8b d'un poinçon 8 de section rectangulaire, animé d'un mouvement de va-et-vient suivant la direction de l'axe 13 du couloir 6. Entre le bord inférieur 8a du poinçon 8 et le fond 6a du couloir 6 est ménagé un étroit espace où est introduite une bande de clinquant 9a tapissant le fond 6a. De même, une bande de clinquant 9b est introduite sous le toit 6b du couloir.

En fonctionnement, des fils continus 15 sont descendus, sur une ou plusieurs rangées situées dans des plans perpendiculaires à l'axe 13 du couloir 6, entre le poinçon 8 et la lame 7, perpendiculairement au fond 6a jusqu'à ce que leurs extrémités inférieures reposent sur le clinquant 9a. Le poinçon 8 est déplacé vers la lame 7 de manière à trancher les fils 15 en segments 5 de longueur convenable, puis continue quelque peu sa course pour pousser ces segments, ainsi que les segments 5 préalablement confectionnés, de façon qu'ils avancent en rangs serrés à l'intérieur du couloir 6. Sur le faisceau de segments de fils 5 ainsi formé pas à pas est déposée la deuxième bande de clinquant 9b, qui passe sous le toit 6b. Les segments 5, sortant ainsi peu à peu du couloir 6, pris en sandwich entre les bandes de clinquant 9a, 9b, sont soudés en continu par leurs extrémités à celles-ci au moyen d'organes de soudage autogène 14a, 14b. Il en résulte un demi-produit stable, qui pourra servir à assujettir ensemble deux plaques pour former une paroi telle que décrite plus haut.

En variante, on peut créer, in situ, une semelle continue sur l'une au moins des faces du faisceau de fils, sans apport de clinquant, par fusion directe des extrémités des fils réalisant leur union, suivie d'un calibrage en épaisseur de l'ensemble.

Le demi-produit ainsi réalisé en ruban continu peut être aisément brasé sur un matériau réfractaire après avoir été éventuellement mis en forme par simple ou double courbure dans des limites dépendant des matériaux utilisés ainsi que de l'épaisseur du ruban. Il est ainsi possible de constituer, par brasage de rubans contigus, la liaison thermique et mécanique d'un bouclier thermique 1 en CMC (composite à matrice céramique) ou en CC (carbone-carbone), capable de supporter des flux importants, à un échangeur métallique 2 étanche, parcouru par un fluide de refroidissement.

## Revendications

1. Dispositif de liaison entre deux corps présentant deux faces parallèles en regard par lesquelles ils sont reliés mutuellement et qui, soumis à de forts gradients thermiques, se dilatent de façon différente, ce dispositif de liaison consistant en une couche intermédiaire (4) limitée par deux faces parallèles et interposée entre les deux faces (1a, 2a) desdits corps (1, 2),
caractérisé par le fait que cette couche est formée d'une multitude de fils indépendants (5) minces et flexibles, d'égale longueur, faits d'une matière rigide mais présentant néanmoins une certaine souplesse transversale et destinés à être fixés par liaison d'encastrement à l'une et à l'autre des faces précitées desdits corps par des parties extrêmes respectives orientées perpendiculairement à ces dernières faces.

2. Dispositif selon la revendication 1, caractérisé par le fait que lesdits fils (5) sont juxtaposés jointivement.

3. Dispositif selon la revendication 1 ou 2, caractérisée par le fait que les parties extrêmes des fils (5) situées dans l'une au moins des faces de ladite couche (4) sont fixées directement au corps (1 ou 2) correspondant.

4. Dispositif selon la revendication 1 ou 2, caractérisé par le fait que les parties extrêmes des fils flexibles (5) situées dans l'une au moins des faces de ladite couche (4) sont fixées au corps (1 ou 2) correspondant par l'intermédiaire d'une feuille (9a ou 9b) interposée s'étendant suivant ladite face.

5. Dispositif selon l'une quelconque des revendications 1 à 3, caractérisé par le fait que les parties extrêmes des fils (5) sont fixées au moyen de brasure ou de soudure.

6. Dispositif selon l'une quelconque des revendications 1 à 5, caractérisé par le fait que les fils (5) sont réalisés en un matériau bon conducteur de la chaleur.

7. Dispositif selon la revendication 6, caractérisé par le fait que les fils (5) sont réalisés en métal ou en carbone.

8. Procédé de fabrication d'une paroi composée de deux plaques à faces en regard planes et parallèles, réunies par un dispositif de liaison,
caractérisé par le fait qu'il consiste essentiellement à disposer deux plaques (1, 2) de part et d'autre d'une couche intermédiaire (4) de liaison composée de fils (5) rigides juxtaposés d'égale longueur, orientés parallèlement suivant la direction perpendiculaire aux faces de ladite couche et réalisés en un matériau bon conducteur de la chaleur, cette couche intermédiaire (4) étant préalablement réalisée sous forme de demi-produit stabilisé, et à effectuer la solidarisation de la face interne (1a, 2a) de chaque plaque (1, 2) avec la face correspondante dudit demi-produit.

9. Procédé selon la revendication 8, caractérisé par le fait que le demi-produit est réalisé en rassemblant lesdits fils (5) en un faisceau limité par deux faces parallèles entre elles et perpendiculaires à la direction commune des fils, et en solidarisant entre elles les extrémités des fils situées dans l'une au moins des deux faces de la couche formée par le faisceau de fils, de façon suffisamment souple et malléable pour rendre cohérent le faisceau de fils sans empêcher de petits déplacements mutuels des extrémités solidarisées des fils.

10. Procédé selon la revendication 8, caractérisé par le fait que la solidarisation mutuelle des extrémités des fils (5) est effectuée par soudage ou brasage superficiel.

11. Procédé selon la revendication 8 ou 9, caractérisé par le fait que les extrémités des fils (5) sont solidarisées par liaison mutuelle directe.

12. Procédé selon la revendication 10, caractérisé par le fait que les extrémités des fils (5) sont solidarisées par soudage ou brasage sur une feuille de clinquant (9a, 9b) appliquée sur la face correspondante de la couche.

13. Procédé selon l'une quelconque des revendications 9 à 12, caractérisé par le fait que les extrémités des fils (5) sont respectivement solidarisées dans chacune des faces de la couche.

14. Procédé selon la revendication 12, caractérisé par le fait que ledit demi-produit est réalisé en confectionnant et en poussant pas à pas des fils (5) d'égale longueur juxtaposés en faisceau dans un couloir de guidage (6) de section rectangulaire, ces fils étant orientés perpendiculairement au fond (6a) du couloir et reposant sur une bande de clinquant (9a) qui progresse le long dudit fond, et en fixant sur celle-ci, à la sortie du couloir (6), les extrémités correspondantes des fils (5) par soudage ou brasage.

15. Procédé selon la revendication 13, caractérisé par le fait que ledit demi-produit est réalisé en confectionnant et en poussant pas à pas des fils (5) d'égale longueur juxtaposés en faisceau dans un couloir de guidage (6) de section rectangulaire, ces fils étant orientés perpendiculairement au fond (6a) du couloir et reposant sur une bande de clinquant (9a) qui progresse le long dudit fond, et en fixant sur celle-ci, à la sortie du couloir (6), les extrémités correspondantes des fils (5) par soudage ou brasage, qu'une autre bande de clinquant (9b) est déposée sur la face du faisceau de fils (5) opposée au fond du couloir (6a), et qu'à cette bande sont de même soudées ou brasées les extrémités correspondantes des fils (5).

16. Procédé selon la revendication 14 ou 15, caractérisé par le fait que le faisceau de fils (5) est confectionné et poussé pas à pas à l'aide d'un même organe (8) animé d'un mouvement de va-et-vient qui, à chaque cycle de déplacement, sectionne en segments de longueur voulue les parties terminales de fils continus introduits à la demande, puis les pousse dans le couloir (6) avec les segments précédemment sectionnés.

## Claims

1. Joining device interposed between two bodies having parallel opposite faces by which they are mutually joined, and which, being exposed to substantial thermal gradients, expand differently, said joining device consisting of an intermediate layer (4) limited by two faces (1a, 2a) of said bodies (1, 2), characterized by the fact that said layer is formed of a multiplicity of thin, flexible and independent wires (5) of equal length, made of a material which is rigid but which has a certain degree of flexibility in a transversal direction, and intended to be rigidly fitted onto one and the other of said faces by respective end portions, which are oriented perpendicularly to said faces.

2. Device according to claim 1, characterized by the fact that said wires (5) are juxtaposed contiguously.

3. Device according to claim 1 or 2, characterized by the fact that the end portions of the wires (5) located in at least one of the faces of said layer (4) are fixed directly to the corresponding body (1 or 2).

4. Device according to claim 1 or 2, characterized by the fact that the end portions of the wires (5) located in at least one of the faces of said layer (4) are fixed to the corresponding body (1 or 2) via an interposed sheet (9a or 9b) extending along said face.

5. Device according to any one of claims 1 or 3, characterized by the fact that the end portions of the wires (5) are fixed by means of brazing or welding.

6. Device according to any one of claims 1 or 5, characterized by the fact that the wires (5) are made of a material which is a good heat conductor.

7. Device according to claim 6, characterized by the fact that the wires (5) are made of metal or carbon.

8. Process for the manufacture of a wall composed of two plates having plane and parallel opposite faces, connected by a joining device, characterized by the fact that it consists essentially in placing two plates (1, 2), on either side of an intermediate connecting layer (4) composed of a juxtaposition of rigid wires (5 of equal lengths, oriented parallel to each other along a direction perpendicular to the faces of said layer and made of high thermal conductivity material, said intermediate layer (4) having previously been made in the form of a stabilised semi-finished product, and in integrating the internal face (1a, 2a) of each plate (1, 2) with said corresponding face of the semi-finished product.

9. Process according to claim 8, characterized by the fact that the semi-finished product is made by grouping said wires (5) into a bundle delimited by two mutually parallel faces that are perpendicular to a length direction of the wires, and by joining together the ends of said wires in at least one of two faces of the layer formed by the bundle of wires, while allowing sufficient suppleness and malleability to make said bundle of wires coherent without preventing small mutual displacements of the integrated ends of the wires.

10. Process according to claim 8, characterized by the fact that the ends of the wires (5) are joined together by surface brazing or welding.

11. Process according to claim 8 or 9, characterized by the fact that the ends of the wires (5) are joined together by direct mutual connection.

12. Process according to claim 10, characterized by the fact that the ends of the wires (5) are joined by welding or brazing onto a leaf of foil (9a, 9b) applied to a corresponding face of said layer.

13. Process according to any one of claims 9 to 12, characterized by the fact that the ends of the wires (5) are joined together in each one of the faces of the layer.

14. Process according to claim 12, characterized by the fact that said semi-finished product is made by preparing and pushing, in a step-by-step manner, wires (5) of equal length, which are juxtaposed in a bundle inside a guide channel (6) of rectangular cross-section, said wires being oriented perpendicularly to the base portion (6a) of the guide channel and resting on a foil strip (9a) which progresses along said base portion, and by fixing corresponding ends of the wires (5) onto said foil strip, at the outlet of the guide channel (6), by brazing or welding.

15. Process according to claim 13, characterized by the fact that the semi-finished product is formed by preparing and pushing, in a step-by-step manner, wires (5) of equal length, which are juxtaposed in a bundle inside a guide channel (6) of rectangular cross-section, said wires being oriented perpendicularly to the base portion (6a) of the guide channel and resting on a foil strip (9a) which progresses along said base portion, and by fixing the corresponding ends of the wires (5) onto said foil strip, at the outlet of the channel (6) by brazing or welding, that another strip of foil (9b) is deposited on the face of the bundle of wires (5) that lies opposite to said base portion (6a) and that said strip is itself brazed or welded onto the corresponding ends of said wires (5).

16. Process according to claim 14 or 15, characterized by the fact that the bundle of wires (5) is prepared and pushed in a step-by-step manner using one member imparted with a reciprocating motion which, at each moving cycle, cuts the end portions of continuous length of wires, fed therethrough as required, into segments of given length and then pushes them into the guide channel (6) together with the segments cut in preceding operations.

## Patentansprüche

1. Verbindungsvorrichtung zwischen zwei Teilen, die zwei parallele, gegenüberliegende Flächen haben, durch die sie miteinander verbunden sind und die sich, wenn sie hohen Temperaturgradienten ausgesetzt werden, unterschiedlich dehnen, wobei die Verbindungsvorrichtung aus einer Zwischenschicht (4) besteht, die durch zwei parallele Flächen begrenzt ist und die zwischen den beiden Flächen (1a, 2a) der Körper (1, 2) angeordnet ist,
**dadurch gekennzeichnet**, daß
die Zwischenschicht aus einer Vielzahl von dünnen und flexiblen unabhängigen Fäden (5) gleicher Länge gebildet ist, die aus einem starren Material hergestellt sind, das aber dennoch eine bestimmte Querflexibilität hat und die dazu bestimmt sind, durch Verankerung in der einen oder der anderen der vorgenannten Flächen die an den jeweiligen Endabschnitten befestigt zu werden, die senkrecht zu diesen letzteren Flächen orientiert sind.

2. Vorrichtung nach Anspruch 1,
**dadurch gekennzeichnet**, daß
die Fäden (5) aneinanderstoßend nebeneinander angeordnet sind.

3. Vorrichtung nach Anspruch 1 oder 2,
**dadurch gekennzeichnet**, daß
die Endabschnitte der Fäden (5), die in wenigstens einer der Flächen der Zwischenschicht (4) liegen, direkt am entsprechenden Körper (1 oder 2) befestigt sind.

4. Vorrichtung nach Anspruch 1 oder 2,
**dadurch gekennzeichnet**, daß
die Endabschnitte der flexiblen Fäden (5), die in wenigstens einer der Flächen der Zwischenschicht (4) liegen, am entsprechenden Körper (1 oder 2) mittels einer zwischengelegten Folie (9a oder 9b) befestigt sind, die sich entsprechend der Fläche erstreckt.

5. Vorrichtung nach einem der Ansprüche 1 bis 3,
**dadurch gekennzeichnet**, daß
die Endabschnitte der Fäden (5) durch Löten oder Schweißen befestigt sind.

6. Vorrichtung nach einem der Ansprüche 1 bis 5,
**dadurch gekennzeichnet**, daß
die Fäden (5) aus einem gut wärmeleitenden Material hergestellt sind.

7. Vorrichtung nach Anspruch 6,
**dadurch gekennzeichnet**, daß
die Fäden (5) aus Metall oder Kohlenstoff hergestellt sind.

8. Verfahren zur Herstellung einer aus zwei gegenüberliegenden, ebenen und parallelen Platten zusammengesetzten Wand, die durch eine Verbindungsvorrichtung verbunden sind,
im wesentlichen **dadurch gekennzeichnet**,
daß zwei Platten (1, 2) auf beiden Seiten einer Verbindungs-Zwischenschicht (4) angeordnet werden, die aus starren, nebeneinander angeordneten Fäden gleicher Länge zusammengesetzt ist, die entsprechend der Richtung senkrecht zu den Flächen der Zwischenschicht parallel orientiert und aus einem gut wärmeleitenden Material hergestellt sind, wobei die Zwischenschicht (4) in Form eines stabilisierten Halbproduktes vorgefertigt wird, und daß die Verbindung der Innenfläche (1a, 2a) jeder Platte (1, 2) mit der entsprechenden Fläche des Halbproduktes durchgeführt wird.

9. Verfahren nach Anspruch 8,
**dadurch gekennzeichnet**, daß
das Halbprodukt dadurch hergestellt wird, daß die Fäden (5) zu einem Bündel zusammengefaßt werden, das durch zwei zueinander parallele und zur gemeinsamen Richtung der Fäden senkrechte Flächen begrenzt wird, und daß die Enden der Fäden, die in wenigstens einer der beiden Flächen der Zwischenschicht liegen, die durch das Fadenbündel gebildet wird, ausreichend flexibel und formbar verbunden werden, um das Fadenbündel zusammenhängend auszubilden, ohne daß kleine gegenseitige Verschiebungen der verbundenen Enden der Fäden verhindert werden.

10. Verfahren nach Anspruch 8,
**dadurch gekennzeichnet**, daß
die gegenseitige Verbindung der Enden der Fäden (5) durch Oberflächenschweißen oder -löten erfolgt.

11. Verfahren nach Anspruch 8 oder 9,
**dadurch gekennzeichnet**, daß
die Enden der Fäden (5) durch gegenseitige direkte Verbindung verbunden werden.

12. Verfahren nach Anspruch 10,
**dadurch gekennzeichnet**, daß
die Enden der Fäden (5) durch Schweißen oder Löten auf einer Metallfolie (9a, 9b) verbunden werden, die auf die entsprechende Fläche der Zwischenschicht aufgebracht wird.

13. Verfahren nach einem der Ansprüche 9 - 12,
**dadurch gekennzeichnet**, daß
die Enden der Fäden (5) jeweils in jeder Fläche der Zwischenschicht befestigt werden.

14. Verfahren nach Anspruch 12,
**dadurch gekennzeichnet**, daß
das Halbprodukt dadurch hergestellt wird, daß Fäden (5) gleicher Länge, die in einem Bündel nebeneinander angeordnet sind, schrittweise hergestellt und in einen Führungskanal (6) mit rechteckigem Querschnitt geschoben werden, wobei die Fäden senkrecht zum Boden (6a) des Kanals orientiert sind und auf einem Metallband (9a) aufliegen, das längs des Bodens vorrückt, und daß darauf am Ausgang des Kanals (6) die entsprechenden Enden der Fäden (5) durch Schweißen oder Löten befestigt werden.

15. Verfahren nach Anspruch 13,
**dadurch gekennzeichnet**, daß
das Halbprodukt dadurch hergestellt wird, daß Fäden gleicher Länge, die in einem Bündel nebeneinander angeordnet sind, schrittweise hergestellt und in einen Führungskanal (6) mit rechteckigen Querschnitt geschoben werden, wobei die Fäden senkrecht zum Boden (6a) des Kanals orientiert sind und auf einem Metallband (9a) aufliegen, das längs des Bodens vorrückt, und daß darauf am Ausgang des Kanals (6) die entsprechenden Enden der Fäden (5) durch Schweißen oder Löten befestigt werden, daß ein weiteres Metallband (9b) auf der Fläche des Bündels der Fasern (5) aufgelegt wird, das den Boden des Kanals (6a) gegenüberliegt, und daß die entsprechenden Enden der Fäden (5) auch auf diesem Band angeschweißt oder angelötet werden.

16. Verfahren nach Anspruch 14 oder 15,
**dadurch gekennzeichnet**, daß
das Bündel der Fasern (5) schrittweise hergestellt und mittels desselben, mit einer Hin- und Herbewegung beaufschlagten Elements (8) verschoben werden, das bei jedem Verschiebezyklus die Endabschnitte der kontinuierlichen, nach Bedarf zugeführten Fäden in Segmente bestimmter Länge schneidet und sie dann in den Kanal (6) mit den zuvor zugeschnittenen Segmenten schiebt.
